# EUROPÄISCHE PATENTSCHRIFT

(11) **EP 1 936 237 B1**
(45) Veröffentlichungstag und Bekanntmachung des Hinweises auf die Patenterteilung: **24.03.2010**
(21) Anmeldenummer: 07024567.5
(22) Anmeldetag: 19.12.2007
(51) Int. Cl.: F16H 25/24, F16H 25/22

(54) **Dichtung für Gewindetrieb**
Seal for thread drive
Joint pour vis de réglage

(30) Priorität: 21.12.2006 DE 102006060681
(43) Veröffentlichungstag der Anmeldung: 25.06.2008
(73) Patentinhaber: Wilhelm Narr GmbH & Co. KG, 73230 Kirchheim/Teck (DE)
(72) Erfinder: Langbein, Ulrich, 73230 Kirchheim/Teck (DE)
(74) Vertreter: Ruckh, Rainer Gerhard

(56) Entgegenhaltungen:
- EP-A- 0 252 423
- EP-A- 0 320 621
- WO-A-81/01440
- DE-A1- 2 718 888
- US-A- 3 614 900
- US-A- 4 846 007

## Beschreibung

Die Erfindung betrifft eine Vorrichtung gemäß dem Oberbegriff des Anspruchs 1.

Eine derartige Vorrichtung ist aus der EP 0 252 423 A2 bekannt. Diese Vorrichtung bildet einen drehbaren Aktuator. Ein aus einem Gehäuse ein- und ausfahrbarer Schaft weist an einem Segment seiner Mantelfläche ein Außengewinde auf, auf welchem die Gewinde von zylindrischen Spindelelementen geführt sind. Im hinteren Teil des Schaft, wo kein Außengewinde vorgesehen ist, ist eine Dichtung gelagert, die eine Abdichtung gegenüber der Gehäusewand bewirkt.

Ein drehbarer Aktuator mit einem entsprechenden Aufbau ist aus der WO 81/01440 A1 bekannt.

Die US 3,614,900 betrifft eine Transmissionsvorrichtung, welche eine in einem zylindrischen Gehäuse verfahrbare Spindel aufweist. Das Gehäuse weist an einer Stirnseite eine Platte auf. In dieser Platte ist eine Bohrung vorgesehen, durch welche die Spindel geführt ist. In der Bohrung ist eine Dichtung befestigt, welche eine an die Profilierung der Spindel angepasste Kontur aufweist.

Aus der DE 37 39 059 A1 ist eine Vorrichtung bekannt, die zur Umwandlung einer Drehbewegung in eine Axialbewegung oder umgekehrt dient. Als wesentliche Komponenten umfasst die Vorrichtung eine eine Außenprofilierung aufweisende Spindel, eine die Spindel umgebende und relativ zu dieser drehbare, eine Innenprofilierung aufweisende Mutter und dazwischen angeordnete Wälz- oder Rollenkörper, welche unterschiedliche Profilierungen aufweisen, von welchen die eine einen axialen Kraftschluss mit der Außenprofilierung der Spindel und die andere einen axialen Kraftschluss mit der Mutter herstellt.

Mit dieser Vorrichtung können insbesondere hochpräzise Gewindetriebe realisiert werden, die beispielsweise für Positionieraufgaben in unterschiedlichen industriellen Anwendungen eingesetzt werden können. Dem Gewindetrieb ist hierzu generell ein Elektroantrieb zugeordnet, dessen Drehbewegung durch den Gewindetrieb in eine langsame Axialbewegung umgesetzt wird.

Hierbei wälzen die Wälzkörper, die endseitig vorzugsweise in Abstandsscheiben drehbar gelagert sind, mit einer bestimmten Umlaufgeschwindigkeit auf dem die Außenprofilierung aufweisenden Mantel der Spindel um. Dabei sind die ersten Profilierungen der Wälzkörper in der Außenprofilierung der Spindel geführt. Die Profilierung der über den Umfang der Spindel verteilten, vorzugsweise an äquidistanten Winkelscheiben zueinander liegenden Wälzkörper weisen einen axialen Versatz auf.

Der axiale Versatz der Profilierung der einzelnen Wälzkörper leitet sich von der Steigung der Außenprofilierung der Spindel ab. Dadurch bilden die Wälzkörper in ihrer Gesamtheit ein Gewinde für die Spindel. Das Gewinde ist damit nicht von der Innenprofilierung der Mutter gebildet. In dieser Innenprofilierung laufen vielmehr die zweiten Profilierungen der Walzkörper.

Bei der so ausgebildeten Vorrichtung laufen die Wälzkörper entsprechend dem Käfig eines Kugellagers um. Diese Bewegung ist langsamer als die Drehbewegung der Spindel. Erst nach einem vollständigen Umlauf der Wälzkörper hat sich die Spindel um den Betrag der Steigung deren Außenprofilierung in axialer Richtung verschoben. Die effektive Steigung der Vorrichtung ist somit kleiner als die Steigung der Außenprofilierung der Spindel.

Vorteilhaft hierbei ist, dass schnelle Drehbewegungen in langsame Axialbewegungen umsetzbar sind, so dass damit Positionsaufgaben mit hoher Genauigkeit durchgeführt werden können.

Ein Problem bei derartigen Vorrichtungen ist deren Abdichtung um ein Austreten von Fett zu verhindern, welches zur Schmierung der Vorrichtung benötigt wird. Ein Austreten von Fett wird insbesondere bei Applikationen erhalten, bei welchen die Vorrichtung mit senkrecht stehender Achse betrieben wird. Hier erfolgt schwerkraftbedingt ein Austreten von Fett.

Bei bekannten Gewindetrieben wird deren Abdichtung durch Dichtungen in Form von Abstreifern erreicht, die fest mit der Mutter verbunden sind und die Spindel gleitend abdichten, d. h. auf der Außenprofilierung der Spindel gleiten.

Eine derartig ausgebildete Dichtung ist bei Vorrichtungen der eingangs genannten Art prinzipiell nicht möglich. Dies beruht darauf, dass die Wälz- oder Rollenkörper, welche das Gewinde für die Außenprofilierung der Spindel bilden, eine langsamere Umlaufgeschwindigkeit aufweisen als die Drehbewegung der Spindel. Im Ergebnis führt dies dazu, dass die Profilkontur der Außenprofilierung der Spindel in axialer Richtung wandert und so gegenüber der Mutter nicht fest steht, d. h. bei stehender Mutter bleibt das Schattenbild der Außenprofilierung der Spindel während ihrer Drehung gegenüber der Mutter nicht stehen. Damit ist eine an der Mutter befestigte und in der Spindel gleitende Dichtung in diesem Fall nicht einsetzbar.

Der Erfindung liegt die Aufgabe zugrunde, eine konstruktiv einfache Abdichtung für eine Vorrichtung der eingangs genannten Art bereitzustellen.

Zur Lösung dieser Aufgabe sind die Merkmale des Anspruchs 1 vorgesehen. Zweckmäßige Weiterbildungen der Erfindung sind in den Unteransprüchen beschrieben.

Mit dem erfindungsgemäßen Dichtmittel wird auf effiziente und konstruktiv einfache Weise eine Abdichtung der Nahtstellen zwischen den Wälz- oder Rollenkörpern und der Spindel erhalten.

Dabei liegt der Erfindung die Erkenntnis zugrunde, dass die Profilierungen der einzelnen Wälz- oder Rollenkörper, die über die Mantelfläche der Spindel vorzugsweise äquidistant zueinander angeordnet sind, jeweils zueinander einen definierten axialen Versatz aufweisen, wodurch diese Wälz- oder Rollkörper ein Gewinde für die Außenprofilierung der Spindel bilden. Da erfindungsgemäß das Dichtmittel mit der Umlaufgeschwindigkeit der Wälz- oder Rollkörper mitrotiert, bildet die Außenprofilierung der Spindel von dem Dichtmittel aus beobachtet eine stehende Kontur. Dies ist die Voraussetzung dafür, dass das Dichtmittel gleitend auf der Außenprofilierung der Spindel aufliegen kann, so dass mit dem Dichtmittel eine Abdichtung gegenüber der Spindel erzielt wird.

Erfindungsgemäß kann das Dichtmittel an einer Abstandsscheibe angebracht werden, in welcher die Wälz- oder Rollkörper jeweils mit einem ihrer längsseitigen Enden drehbar gelagert sind. Dabei kann das Dichtmittel, welches in Form eines Dichtungsrings ausgebildet ist, durch Klemmteile oder durch Klebeverbindungen an der Abstandsscheibe fixiert werden. Der konstruktive Aufwand zur Anbringung des Dichtmittels kann somit sehr gering gehalten werden.

Gemäß einer ersten vorteilhaften Variante der Erfindung übernimmt das Dichtmittel nicht nur die Abdichtung gegenüber der Spindel sondern gleichzeitig gegenüber der Mutter. Hierzu gleitet ein Segment des Dichtmittels an einem mit der Mutter fest verbundenen Bauteil.

Bei der ersten Ausgestaltung ist vorteilhaft, dass mit dem Dichtmittel zugleich eine Abdichtung gegenüber der Mutter und der Spindel erzielt wird, die Anzahl der Einzelteile zur Abdichtung kann somit sehr gering gehalten werden.

Jedoch ist hierbei nachteilig, dass der Durchmesser des Dichtmittels, vorzugsweise in Form eines Dichtrings, entsprechend groß gewählt werden muss, damit mit diesem eine Abdichtung zur Mutter und zur Spindel hin erzielt wird.

Durch diesen großen Durchmesser wird die Reibung des Dichtmittels relativ groß. Zudem ist die Gleitgeschwindigkeit am äußeren Rand des Dichtmittels, der auf der Mutter gleitet relativ groß, wodurch die maximale Drehzahl der Vorrichtung begrenzt wird.

Dieser Nachteil kann dadurch beseitigt werden, dass ein mit der Mutter fest verbundenes Bauteil vorgesehen ist, insbesondere in Form einer die Öffnung am längsseitigen Rand der Mutter teilweise abdeckenden Deckscheibe. Dann liegt gemäß der zweiten Ausgestaltung ein Segment des Dichtmittels an der Deckscheibe an. In diesem Fall kann das Dichtmittel einen erheblich kleineren Durchmesser aufweisen, da die Deckscheibe bis dicht vor die Spindel geführt werden kann.

Gemäß einer zweiten vorteilhaften Variante der Erfindung übernimmt das Dichtmittel allein die Abdichtung zur Spindel hin, während mittels einer zusätzlichen Dichtung die Abdichtung gegenüber der Mutter übernommen wird. Hierzu kann die Dichtung wie das Dichtmittel selbst auf der Abstandsscheibe montiert sein und an der Mutter gleiten. Alternativ kann auch die Dichtung an der Mutter befestigt sein und auf der Abstandsscheibe gleiten.

In beiden Fällen kann der Durchmesser des Dichtmittels gering gehalten werden, da dieser nur noch zur Abdichtung gegenüber der Spindel eingesetzt wird. Auch die Dichtung selbst kann einen kompakten Aufbau aufweisen, da diese allein zur Abdichtung zwischen Abstandsscheibe und Mutter benötigt wird.

Im einfachsten Fall wird nur ein Dichtmittel und ggf. eine zugeordnete Dichtung benötigt, um die Öffnung an einem längsseitigen Rand der Mutter abzudichten. Diese Variante kommt insbesondere dann zum Einsatz, wenn die Vorrichtung mit senkrecht stehender Spindel betrieben wird, so dass bedingt durch die Schwerkraft das Fett zur Schmierung der Vorrichtung nur an deren unterem Ende austreten kann.

Generell können jedoch auch an beiden Enden der Vorrichtung Dichtmittel und ggf. diesen zugeordnete Dichtungen vorgesehen sein, wobei diese bevorzugt identisch ausgebildet sind.

Die Erfindung wird im Nachstehenden anhand der Zeichnungen erläutert. Es zeigen:
- Figur 1:: Erstes Ausführungsbeispiel von Abdichtungen für eine Vorrichtung zur Umwandlung einer Drehbewegung in eine Axialbewegung.
- Figur 2:: Vergrößerte Teildarstellung der Anordnung gemäß Figur 1.
- Figur 3:: Zweites Ausführungsbeispiel von Abdichtungen für eine Vorrichtung gemäß Figur 1.
- Figur 4:: Vergrößerte Teildarstellung der Anordnung gemäß Figur 3.

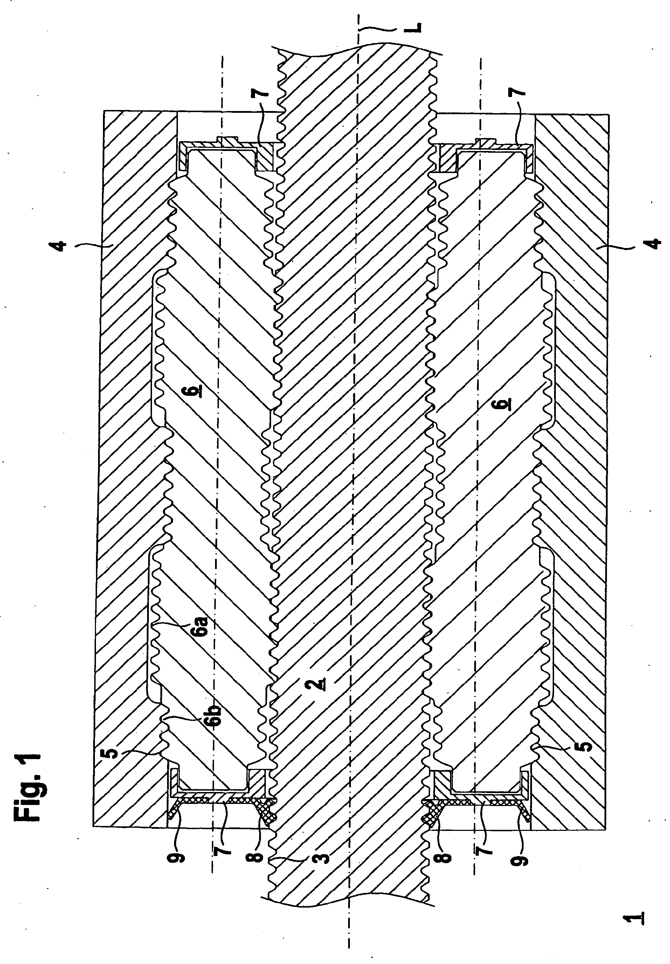

Figur 1 zeigt in einem Längsschnitt eine Vorrichtung 1 zur Umwandlung einer Drehbewegung in eine Axialbewegung oder umgekehrt. Die mit einem nicht gesondert dargestellten Elektromotor angetriebene Vorrichtung 1 umfasst eine Spindel 2, die an ihrer Mantelfläche eine Außenprofilierung 3 in Form von Rillen aufweist. Die Spindel 2 bildet somit eine Gewindespindel und kann die Welle des Elektromotors bilden. Die Spindel 2 ist von einer Mutter 4 umgeben, wobei die Mutter 4 gegenüber der Spindel 2 drehbar ist. An der Innenseite der Mutter 4 ist eine Innenprofilierung 5 in Form von Rillen vorgesehen.

Zwischen der hohlzylindrischen Mutter 4 und der Spindel 2 ist eine vorgegebene Anzahl von Wälzkörpern 6 vorgesehen. Anstelle von Wälzkörpern 6 können auch Rollenkörper vorgesehen sein. Die Wälzkörper 6 sind in äquidistanten Winkeldistanzen in Umfangsrichtung der Spindel 2 versetzt angeordnet, wobei die Längsachsen der Wälzkörper 6 parallel zur Längsachse L der Spindel 2 verlaufen. Die längsseitigen Enden der Wälzkörper 6 sind jeweils in einer Abstandsscheibe 7 drehbar gelagert. Die Wälzkörper 6 weisen jeweils eine erste Profilierung 6a und eine zweite Profilierung 6b auf. Mit der ersten Profilierung 6a wird ein axialer Kraftschluss des Wälzkörpers 6 mit der Spindel 2 hergestellt indem diese Profilierung 6a in der Außenprofilierung 3 der Spindel 2 geführt ist. Mit der zweiten Profilierung 6b wird ein axialer Kraftschluss des Wälzkörpers 6 mit der Mutter 4 hergestellt, indem diese Profilierung 6b in der Innenprofilierung 5 der Mutter 4 geführt ist.

Die die längsseitigen Enden aufnehmenden Abstandsscheiben 7 dienen als Abstandshalter für die Wälzkörper 6. Die identisch ausgebildeten Abstandsscheiben 7 weisen eine kreisscheibenförmige Form auf. In der Mitte jeder Abstandsscheibe 7 ist eine Bohrung vorgesehen, durch welche die Spindel 2 geführt ist. An der dem Wälzkörper 6 zugewandte Seite jeder Abstandsscheibe 7 sind Aufnahmen 7a für die Enden der Wälzkörper 6 vorgesehen. In diesen Aufnahmen 7a sind die Wälzkörper 6 drehbar gelagert. Die Abstandsscheiben 7 liegen jeweils in Abstand zur Mutter 4 und zur Spindel 2.

Die Profilierungen 6a der einzelnen Wälzkörper 6 sind versetzt zueinander. Dabei weist die Profilierung 6a jedes Wälzkörpers 6 zu dem vorigen Wälzkörper 6 einen definierten axialen Versatz auf. Die versetzten Profilierungsstrukturen der Wälzkörper 6 bilden ein Gewinde für die Außenprofilierung 3 der Spindel 2. Bei einer Drehbewegung der Spindel 2 relativ zur Mutter 4 wälzen die Wälzkörper 6 mit den Profilierungen 6a auf der Außenprofilierung 3 ab, wobei zugleich die zweiten Profilierungen 6b in der Innenprofilierung 5 der Mutter 4 geführt sind. Bei stehender Mutter 4 und sich drehender Spindel 2 laufen die in den Abstandsscheiben 7 gelagerten Wälzkörper 6 auf der Mantelfläche der Spindel 2 um, wobei diese Bewegung langsamer ist als die Drehbewegung der Spindel 2. Die Drehbewegungen erfolgen derart, dass sich erst nach einem vollständigen Umlauf der Wälzkörper 6 die Spindel 2 um den Betrag der Steigung der Außenprofilierung 3 axial verschoben hat.

Wie aus Figur 1 ersichtlich sind an einer Abstandsscheibe 7 Mittel zur Abdichtung dieser Abstandsscheibe 7 gegenüber der Mutter 4 und der Spindel 2 vorgesehen. Generell können auch an beiden Abstandsscheiben 7 derartige Mittel zur Abdichtung vorgesehen sein, wobei diese bevorzugt identisch ausgebildet sind.

Mit diesen Mitteln zur Abdichtung wird ein Austreten von Fett aus der Vorrichtung 1 verhindert, welches zur Schmierung der Vorrichtung 1 benötigt wird. Weiterhin verhindern diese Mittel zur Abdichtung auch ein Eindringen von Schmutz in die Vorrichtung 1.

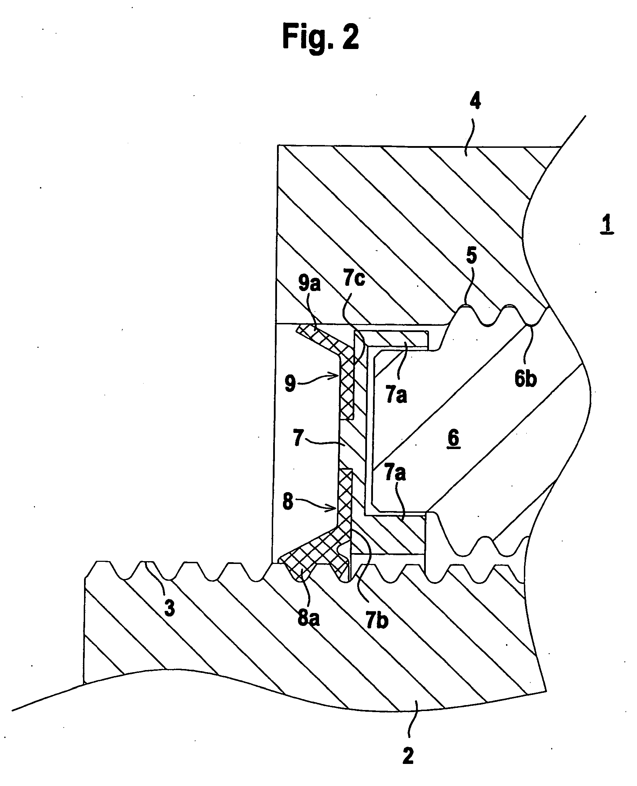

Figur 2 zeigt eine vergrößerte Darstellung des Ausschnitts der Anordnung gemäß Figur 1 mit den Mitteln zur Abdichtung.

Bei der Ausführungsform gemäß Figuren 1 und 2 ist ein Dichtmittel in Form eines Dichtungsrings 8 vorgesehen. Der Dichtungsring 8 ist an der Abstandsscheibe 7 befestigt und dreht sich somit mit dieser. Wie aus den Figuren 1 und 2 ersichtlich liegt der Dichtungsring 8 mit seiner Rückseite in einer Aussparung 7b der dem Wälzkörper 6 abgewandten Frontseite der Abstandsscheibe 7. Die Kontur des Dichtungsrings 8 ist hierzu an die Kontur der Aussparung angepasst.

Der Dichtungsring 8 kann aus teflonbasierten Materialien oder dergleichen bestehen. Im vorliegenden Fall ist der Dichtungsring 8 an der Abstandsscheibe 7 festgeklebt. Generell kann der Dichtungsring 8 auch mit geeigneten Klemmteilen oder dergleichen an der Abstandsscheibe 7 fixiert werden.

Am innen liegenden Rand des Dichtungsrings 8 ist ein verbreitertes Segment 8a vorgesehen, welches auf der Spindel 2 gleitet. Das Segment 8a ist dabei so profiliert, dass es in die Außenprofilierung 3 greifend auf der Mantelfläche der Spindel 2 gleitet.

Da der Dichtungsring 8 an der Abstandsscheibe 7 fixiert ist ist eine feste, unveränderliche Position des Dichtungsrings 8 relativ zu der Abstandsscheibe 7 und damit auch zu den Profilierungen 6a der Wälzkörper 6 gegeben. Da die Profilierungen 6a der Wälzkörper 6 das Gewinde für die Außenprofilierung 3 der Spindel 2 bilden, bildet somit die Außenprofilierung 3 der Spindel 2 relativ zur Abstandsscheibe 7 und damit auch zum Dichtungsring 8 eine stehende Kontur. Damit kann das untere Segment des Dichtungsrings 8 während den gesamten Drehbewegungen des Wälzkörpers 6 und der Spindel 2 in der Außenprofilierungen 3 der Spindel 2 gleiten, wodurch eine sichere Abdichtung zwischen Abstandsscheibe 7 und Spindel 2 erzielt wird.

Zur Abdichtung zwischen Abstandsscheibe 7 und Mutter 4 ist eine separate Dichtung 9 vorgesehen, die wie das Dichtmittel ringförmig ausgebildet ist. Die Dichtung 9 ist somit wie der Dichtungsring 8 rotationssymmetrisch zur Längsachse L der Spindel 2 und konzentrisch zum Dichtungsring 8 angeordnet. Die Dichtung 9 ist an der Abstandsscheibe 7 befestigt, im vorliegenden Fall an dieser festgeklebt. Dabei liegt die Dichtung 9 in einer weiteren Aussparung 7c an der Vorderseite der Abstandsscheibe 7. Ein den äußeren Rand der Dichtung 9 bildendes Segment 9a steht über die Abstandsscheibe 7 hervor und gleitet an der Innenseite der Mutter 4, wobei mit der Dichtung 9 eine Abdichtung gegenüber der Mutter 4 erzielt wird.

Generell können der Dichtring 8 und die Dichtung 9 auch in einem großen Dichtring zusammengefasst sein, der an der Abstandsscheibe 7 fixiert sowohl die Abdichtung gegenüber der Mutter 4 und der Spindel 2 übernimmt.

Weiterhin kann generell die Dichtung 9 auch an der Mutter 4 befestigt sein, so dass dann ein Segment der Dichtung 9 an der Abstandsscheibe 7 gleitet.

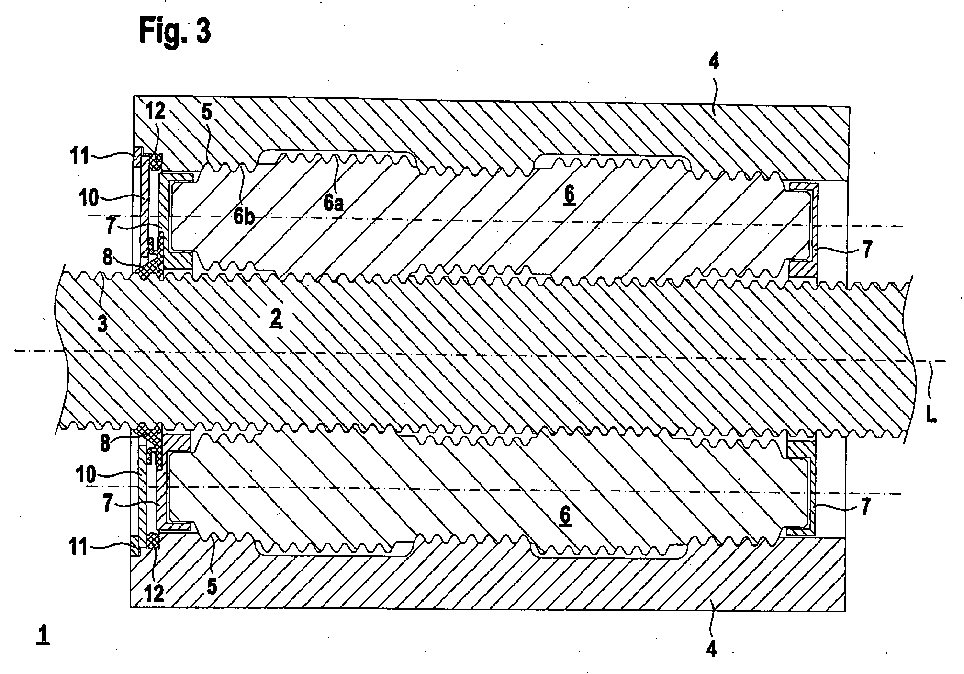

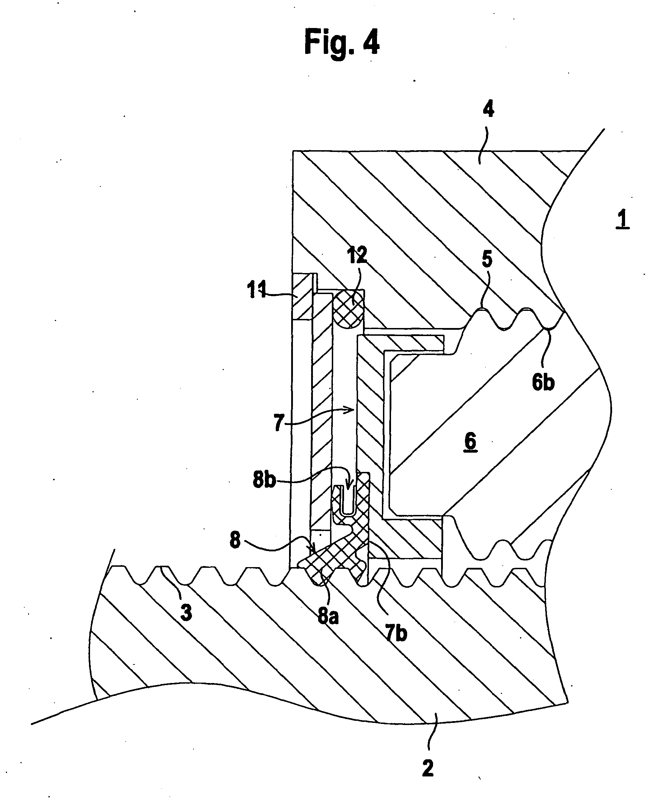

Die Figuren 3 und 4 zeigen ein weiteres Ausführungsbeispiel einer eine Abdichtung aufweisenden Vorrichtung 1. Der Aufbau der Vorrichtung 1 entspricht dabei der Ausführungsform gemäß den Figuren 1 und 2.

Im vorliegenden Fall ist an der Mutter 4 eine Deckscheibe 10 befestigt. Diese Deckscheibe 10 ist mittels eines Sprengrings 11 an der Mutter 4 fixiert und mittels eines Runddichtrings 12 gegen die Mutter 4 abgedichtet. Die kreisscheibenförmige Deckscheibe 10 weist eine zentrale Bohrung auf, durch welche die Spindel 2 geführt ist. Die Deckscheibe 10 schließt an die Abstandsscheibe 7 an und deckt den größten Teil der Öffnung der Mutter 4 an deren längsseitigem Rand ab, wobei der die Bohrung begrenzende Rand der Deckscheibe 10 bis dicht vor die Mantelfläche der Spindel 2 geführt ist.

Als Dichtmittel ist wiederum ein Dichtungsring 8 vorgesehen, der in der Aussparung 7b an der Vorderseite der Abstandsscheibe 7 gelagert ist. Der Dichtungsring 8 ist dabei an der Abstandsscheibe 7 festgeklebt.

Entsprechend der Ausführungsform gemäß den Figuren 1 und 2 ist am innen liegenden Rand des Dichtungsrings 8 das verbreiterte Segment 8a vorgesehen, welches in der Außenprofilierung 3 der Spindel 2 gleitet und so für die Abdichtung zwischen Abstandsscheibe 7 und Spindel 2 sorgt.

Im vorliegenden Fall weist der Dichtungsring 8 ein weiteres, an seiner Vorderseite hervorstehendes Segment 8b auf, welches einen U-förmigen Querschnitt aufweist. Dieses Segment 8b liegt an der Deckscheibe 10 an und gleitet auf dieser. Dadurch bewirkt das Segment 8b eine Abdichtung zwischen Abstandsscheibe 7 und Deckscheibe 10. Da die Deckscheibe 10 selbst fest und dicht mit der Mutter 4 verbunden ist, wird dadurch eine Abdichtung gegenüber der Mutter 4 erzielt. Damit wird mit dem an der Abstandsscheibe 7 befestigten Dichtungsring 8 sowohl eine Abdichtung gegenüber der Mutter 4 als auch gegenüber der Spindel 2 erzielt. Da sich die Deckscheibe 10 bis dicht vor die Spindel 2 erstreckt, kann das Segment 8b des Dichtungsrings 8 dicht oberhalb des Segments 8a angeordnet sein, so dass dadurch der Dichtungsring 8 eine kompakte Bauform und insbesondere einen kleinen Außendurchmesser aufweist.

Um eine gute Abdichtung gegenüber der Deckscheibe 10 zu erzielen, ist es erforderlich, dass das Segment 8b langzeitstabil mit einem gewissen Anpressdruck anliegt. Hierzu kann vorteilhaft in das Segment 8b ein Federelement aus Metall eingearbeitet sein, das entsprechend der Form des Segments 8b einen U-förmigen Querschnitt aufweist.

Auch die Ausführungsform gemäß den Figuren 3 und 4 kann dahingehend erweitert sein, dass an beiden Abstandsscheiben 7 vorzugsweise identisch ausgebildete Mittel zur Abdichtung vorgesehen sind.

### Bezugszeichenliste

- (1): Vorrichtung
- (2): Spindel
- (3): Außenprofilierung
- (4): Mutter
- (5): Innenprofilierung
- (6): Wälzkörper
- (6a): erste Profilierung
- (6b): zweite Profilierung
- (7): Abstandsscheibe
- (7a): Aufnahmen
- (7b): Aussparung
- (7c): Aussparung
- (8): Dichtungsring
- (8a): Segment
- (8b): Segment
- (9): Dichtung
- (9a): Segment
- (10): Deckscheibe
- (11): Sprengring
- (12): Runddichtring

- (L): Längsachse

## Patentansprüche

1. Vorrichtung (1) zur Umwandlung einer Drehbewegung in eine Axialbewegung oder umgekehrt, mit einer eine Außenprofilierung (3) aufweisenden Spindel (2), mit einer die Spindel (2) umgebenden und relativ zu dieser drehbaren, eine Innenprofilierung (5) aufweisenden Mutter (4) und mit dazwischen angeordneten Wälz- oder Rollkörpern, welche zwei unterschiedliche Profilierungen aufweisen, von welchen die eine einen axialen Kraftschluss zur Außenprofilierung (3) der Spindel (2) und die andere einen axialen Kraftschluss zur Innenprofilierung (5) der Mutter (4) herstellt, wobei die ersten längsseitigen Enden der Wälz- oder Rollenkörper in einer ersten Abstandsscheibe (7) drehbar gelagert und die zweiten längsseitigen Enden der Wälz- oder Rollenkörper in einer zweiten Abstandsscheibe (7) drehbar gelagert sind, und wobei an der ersten und/oder zweiten Abstandsscheibe (7) ein Dichtmittel befestigt ist, welches als Dichtungsring (8) ausgebildet ist und welches mit der Umlaufgeschwindigkeit der Wälz- oder Rollenkörper drehend auf der Spindel (2) gleitet, **dadurch gekennzeichnet, dass** ein Segment des Dichtungsrings (8) in die Außenprofilierung (3) der Spindel (2) greift und dass mittels des als Dichtungsring (8) ausgebildeten Dichtmittels eine Abdichtung gegenüber der Mutter (4) erfolgt, wobei ein Segment des Dichtungsrings (8) auf einem mit der Mutter (4) fest verbundenen Bauteil gleitet, welches von einer Deckscheibe (10) gebildet ist, die eine Öffnung an einem längsseitigen Ende der Mutter (4) abdeckt, wobei in das Segment des Dichtungsrings (8) ein Federelement eingearbeitet ist, mittels dessen das Segment mit einem Anpressdruck an der Deckscheibe (10) anliegt, oder dass zusätzlich zu dem von dem Dichtungsring (8) gebildeten Dichtmittel eine Dichtung (9) zur Abdichtung gegenüber der Mutter (4) vorgesehen ist, welche an der Abstandsscheibe (7) befestigt ist und an der Mutter (4) oder an einem mit der Mutter (4) verbundenen Bauteil gleitet.

2. Vorrichtung (1) nach Anspruch 1, **dadurch gekennzeichnet, dass** das oder jedes Dichtmittel rotationssymmetrisch ausgebildet ist.

3. Vorrichtung (1) nach einem der Ansprüche 1 oder 2, **dadurch gekennzeichnet, dass** die Symmetrieachse des oder jedes Dichtmittels mit der Längsachse der Spindel (2) zusammenfällt.

4. Vorrichtung (1) nach einem der Ansprüche 1 bis 3, **dadurch gekennzeichnet, dass** die Dichtmittel identisch ausgebildet sind.

5. Vorrichtung (1) nach einem der Ansprüche 1 bis 4, **dadurch gekennzeichnet, dass** die oder jede Dichtung (9) an der Mutter (4) oder an einem mit der Mutter (4) verbundenen Bauteil befestigt ist und auf der Abstandsscheibe (7) gleitet.

6. Vorrichtung (1) nach einem der Ansprüche 1 bis 5, **dadurch gekennzeichnet, dass** die oder jede Dichtung (9) von einem rotationssymmetrischen Dichtungsring (8) gebildet ist.

7. Vorrichtung (1) nach einem der Ansprüche 1 bis 6, **dadurch gekennzeichnet, dass** die oder jede Dichtung (9) konzentrisch zum zugeordneten Dichtmittel angeordnet ist.

## Claims

1. Device (1) for converting a rotational movement into an axial movement or vice versa, with a spindle (2) having an external profiling (3), with a nut (4) surrounding and rotatable relative to the spindle (2) and having an internal profiling (5), and with roller or rollable bodies arranged therebetween and having two different profilings, of which one produces an axial force couple relative to the external profiling (3) of the spindle (2) and the other produces an axial force couple with respect to the internal profiling (5) of the nut (4), wherein the first longitudinal-side ends of the roller or rollable bodies are rotatably mounted in a first spacer disc (7) and the second longitudinal-side ends of the roller or rollable bodies are rotatably mounted in a second spacer disc (7), and wherein a sealing means, which is constructed as a sealing ring (8) and which rotatably slides on the spindle (2) at the circumferential speed of the roller or rollable bodies is fastened to the first and/or second spacer disc (7), **characterised in that** a segment of the sealing ring (8) engages in the external profiling (3) of the spindle (2) and that a sealing relative to the nut (4) is effected by way of the sealing means, which is constructed as a sealing ring (8), wherein a segment of the sealing ring (8) slides on a component which is fixedly connected with the nut (4) and which is formed by a cover disc (10) covering an opening at a longitudinal-side end of the nut (4), wherein formed in the segment of the sealing ring (8) is a spring element by means of which the segment bears by a pressing pressure against the cover disc (10) or that in addition to the sealing means formed by the sealing ring (8) a seal (9) which is fastened to the spacer disc (7) and slides at the nut (4) or a component connected with the nut (4) is provided for sealing relative to the nut (4).

2. Device (1) according to claim 1, **characterised in that** the or each sealing means is of rotationally symmetrical construction.

3. Device (1) according to one of claims 1 and 2, **characterised in that** the axis of symmetry of the or each sealing means coincides with the longitudinal axis of the spindle (2).

4. Device (1) according to any one of claims 1 to 3, **characterised in that** the sealing means are of identical construction.

5. Device (1) according to any one of claims 1 to 4, **characterised in that** the or each seal (9) is fastened to the nut (4) or to a component connected with the nut (4) and slides on the spacer disc (7).

6. Device (1) according to any one of claims 1 to 5, **characterised in that** the or each seal (9) is formed by a rotationally symmetrical sealing ring (8).

7. Device (1) according to any one of claims 1 to 6, **characterised in that** the or each seal (9) is arranged concentrically with respect to the associated sealing means.

## Revendications

1. Dispositif (1) pour convertir un mouvement rotatoire en un mouvement axial, ou inversement, comprenant une broche (2) munie d'un profilage extérieur (3) ; un écrou (4) doté d'un profilage intérieur (5), entourant ladite broche (2) et pouvant tourner vis-à-vis de cette dernière ; et des corps intercalaires de roulement ou de révolution qui présentent deux profilages différents dont l'un établit une coopération mécanique axiale avec le profilage extérieur (3) de la broche (2), et l'autre établit une coopération mécanique axiale avec le profilage intérieur (5) de l'écrou (4), sachant que les premières extrémités longitudinales des corps de roulement ou de révolution sont montées à rotation dans un premier disque d'espacement (7), et que les secondes extrémités longitudinales desdits corps de roulement ou de révolution sont montées à rotation dans un second disque d'espacement (7), et sachant qu'un moyen d'étanchement, fixé au(x)dit(s) premier et/ou second disque(s) d'espacement (7), est réalisé sous la forme d'une bague d'étanchement (8) et glisse sur la broche (2) en accomplissant une rotation, à la vitesse de révolution des corps de roulement ou de révolution, **caractérisé par le fait qu'**un segment de la bague d'étanchement (8) s'engage dans le profilage extérieur (3) de la broche (2) ; et **par le fait qu'**une étanchéité vis-à-vis de l'écrou (4) est instaurée à l'aide du moyen d'étanchement se présentant comme une bague d'étanchement (8), un segment de ladite bague d'étanchement (8) glissant sur une pièce structurelle reliée rigidement à l'écrou (4) et matérialisée par un disque de recouvrement (10) occultant un orifice pratiqué à une extrémité longitudinale dudit écrou (4), le segment de ladite bague d'étanchement (8) comportant un élément élastique intégré, au moyen duquel ledit segment est appliqué contre le disque de recouvrement (10) par une pression de contact ; ou **par le fait qu'**une garniture d'étanchement (9) prévue en plus du moyen d'étanchement matérialisé par la bague d'étanchement (8), afin d'assurer l'étanchéité vis-à-vis de l'écrou (4), est fixée au disque d'espacement (7) et glisse sur l'écrou (4), ou sur une pièce structurelle reliée audit écrou (4).

2. Dispositif (1) selon la revendication 1, **caractérisé par le fait que** le, ou chaque moyen d'étanchement est réalisé avec symétrie de rotation.

3. Dispositif (1) selon l'une des revendications 1 ou 2, **caractérisé par le fait que** l'axe de symétrie du, ou de chaque moyen d'étanchement, coïncide avec l'axe longitudinal de la broche (2).

4. Dispositif (1) selon l'une des revendications 1 à 3, **caractérisé par le fait que** les moyens d'étanchement sont de réalisations identiques.

5. Dispositif (1) selon l'une des revendications 1 à 4, **caractérisé par le fait que** la, ou chaque garniture d'étanchement (9) est fixée à l'écrou (4) ou à une pièce structurelle reliée audit écrou (4), et glisse sur le disque d'espacement (7).

6. Dispositif (1) selon l'une des revendications 1 à 5, **caractérisé par le fait que** la, ou chaque garniture d'étanchement (9) se présente comme une bague d'étanchement (8) à symétrie de rotation.

7. Dispositif (1) selon l'une des revendications 1 à 6, **caractérisé par le fait que** la, ou chaque garniture d'étanchement (9) est agencée concentriquement au moyen d'étanchement associé.
